# EUROPEAN PATENT APPLICATION

(11) **EP 4 730 543 A1**
(43) Date of publication of application: **22.04.2026**
(21) Application number: 25197565.2
(22) Date of filing: 22.08.2025
(51) Int. Cl.: H01M 50/503, H01M 50/505, H01M 50/581

(54) **BATTERY MODULE**

(30) Priority: 15.10.2024 KR 20240140539
(71) Applicant: Samsung SDI Co., Ltd., Yongin-si, Gyeonggi-do 17084 (KR)
(72) Inventor: BAE, JEONGGUK, YONGIN-SI 17084 (KR)
(74) Representative: Regimbeau

(57) **Abstract**

A battery module (100) includes battery cells (10) and bus bars (400) electrically connecting the battery cells. Each of the bus bars include a first conductor (431) and a second conductor (432) connected to two adjacent battery cells, and a connecting portion (433) electrically connecting the first conductor to the second conductor. An end of the first conductor and an end of the second conductor each include a first magnet (410), opposite ends of the connecting portion (433) are attached by the first magnet, and a metal layer (490) is on a surface of the first magnet (410).

## Description

### BACKGROUND

### 1. Field

One or more embodiments relate to a battery module.

### 2. Description of the Related Art

A secondary battery is designed to be charged and discharged, unlike a primary battery which is not designed to be charged. Low-capacity battery cells are used in portable small-sized electronic devices, such as smartphones, feature phones, laptop computers, digital cameras, and camcorders, while high-capacity battery cells are widely used as energy sources for driving motors in hybrid vehicles, electric vehicles, and the like, and a battery for power storage. A battery cell includes an electrode assembly having a positive electrode and a negative electrode, a case housing the electrode assembly, electrode terminals connected to the electrode assembly, and the like.

Additionally, a high-capacity battery cell may be used as a battery module, in which a plurality of battery cells (e.g., for driving motors in hybrid vehicles) are connected in series and/or in parallel, to provide high energy density.

### SUMMARY

One or more embodiments of the disclosure provide a battery module with improved stability by automatically blocking a current path in response to a temperature of the battery module rising.

However, embodiments of the disclosure are not restricted to the one set forth herein, and he other embodiments of the disclosure will become more apparent to those skilled in the art to which the disclosure pertains by referencing the following detailed description of the disclosure.

According to one or more embodiments, a battery module includes a plurality of battery cells, and a plurality of bus bars electrically connecting the plurality of battery cells. Each bus bar includes a first conductor and a second conductor connected to two adjacent battery cells of the plurality of battery cells, and a connecting portion electrically connecting the first conductor to the second conductor. An end of the first conductor and an end of the second conductor each include a first magnet. Opposite ends of the connecting portion are attached by the first magnet of the first conductor and the first magnet of the second conductor. A metal layer is on a surface of the first magnet.

In an embodiment, the opposite ends of the connecting portion may further include second magnets having opposite polarities to the first magnets, and the first magnets may be attached to the second magnets.

In an embodiment, the battery module may further include a basket below the connecting portion and having a concave seat portion.

In an embodiment, the connecting portion may be configured to fall into the basket in response to the first magnet losing a magnetic force at at least a certain temperature.

In an embodiment, a vertical inner surface of the basket may include a first guide portion configured to guide movement of the bus bar, and one side surface of the connecting portion may include a second guide portion coupled to the first guide portion.

In an embodiment, a difference between a depth of the basket and a thickness of the connecting portion may be in a range from approximately 1 mm to approximately 100 mm.

In an embodiment, the battery module may further include an elastic member between the connecting portion and the basket, and the elastic member may tension the connecting portion.

In an embodiment, a thickness of the metal layer may be in a range from approximately 0.01 mm to approximately 50 mm.

In an embodiment, the first magnet in the first conductor and the first magnet in the second conductor may each have a width that decreases in a downward direction, and the second magnets included in the connecting portion may have a shape corresponding to the first magnets.

In an embodiment, a surface of the first magnet may further include a conductive paste layer.

According to one or more embodiments, a battery module includes at least two adjacent battery cells, a bus bar electrically connecting the two adjacent battery cells, and a basket below the bus bar and having a concave seat portion. The bus bar includes a first conductor and a second conductor connected to the two adjacent battery cells, and a connecting portion electrically connecting the first conductor to the second conductor. An end of the first conductor and an end of the second conductor each include a first magnet, opposite ends of the connecting portion are attached by the first magnets, and the connecting portion is configured to fall into the basket in response to the first magnets losing a magnetic force at at least a certain temperature.

In an embodiment, the opposite ends of the connecting portion may further include second magnets having opposite polarities to the opposite first magnets, and the first magnets may be attached to the second magnets.

In an embodiment, a vertical inner surface of the basket may include a first guide portion configured to guide movement of the bus bar, and one side surface of the connecting portion may include a second guide portion coupled to the first guide portion.

In an embodiment, a difference between a depth of the basket and a thickness of the connecting portion may be in a range from approximately 1 mm to approximately 100 mm.

In an embodiment, the battery module may further include an elastic member between the connecting portion and the basket, and the elastic member may tension the connecting portion.

### BRIEF DESCRIPTION OF THE DRAWINGS

The following drawings attached to this specification illustrate preferred embodiments of the disclosure and, together with the detailed description of the disclosure to be given below, serve to further understand the technical idea of the disclosure; therefore, the disclosure should not be interpreted as being limited to matters described in such drawings:
FIG. 1 is a schematic perspective view of a battery module according to an embodiment;
FIG. 2 is a schematic perspective view of a battery cell of the battery module of FIG. 1;
FIG. 3 is a schematic cross-sectional view of the battery cell of FIG. 2 taken along line II-II of FIG. 2;
FIG. 4 is a schematic perspective view of a bus bar in region EA of FIG. 1;
FIGS. 5 and 6 are schematic cross-sectional views each illustrating an embodiment of a bus bar taken along line A-A of FIG. 4;
FIG. 7 is a schematic cross-sectional view of another embodiment of a bus bar taken along the line A-A of FIG. 4;
FIG. 8 is a schematic cross-sectional view of still another embodiment of a bus bar taken along the line A-A of FIG. 4;
FIG. 9 is a schematic enlarged view of region X of the bus bar of FIG. 8;
FIG. 10 is a schematic cross-sectional view of still another embodiment of a bus bar taken along the line A-A of FIG. 4;
FIG. 11 is a schematic cross-sectional view of still another embodiment of a bus bar taken along the line A-A of FIG. 4; and
FIG. 12 is a schematic cross-sectional view of still another embodiment of a bus bar taken along the line A-A of FIG. 4.

### DETAILED DESCRIPTION

Hereinafter, preferred embodiments of the disclosure will be described in detail with reference to the attached drawings. Prior to this, terms or words used in this specification and claims should not be interpreted as limited to their usual or dictionary meanings, and should be interpreted as meanings and concepts that conform to the technical idea of the disclosure based on the principle that the inventor may appropriately define the concept of the term in order to explain his or her own invention in the best way. Therefore, the embodiments described in this specification and the configurations illustrated in the drawings are only some of the most preferred embodiments of the disclosure and do not represent all of the technical ideas of the disclosure, and it should be understood that there may be various equivalents and modified examples that may replace those embodiments at the time of filing this application.

Additionally, the terms "comprise or include" and/or "comprising or including" as used herein specify the presence of stated features, numbers, steps, operations, members, elements, and/or groups thereof, but do not preclude the presence or addition of one or more other features, numbers, operations, members, elements, and/or groups thereof.

Additionally, to help understanding of the disclosure, the accompanying drawings are not drawn to scale, but the dimensions of some components may be exaggerated. The same reference numeral may be assigned to the same component in different embodiments.

Although the terms first, second, and the like may be used herein to describe various components, these components are not limited by these terms. These terms are used only to distinguish one component from another, and unless otherwise stated, it is of course the case that a first component may also be a second component.

Throughout the specification, unless otherwise stated, each component may be singular or plural.

Placing any component at an "upper portion (or lower portion)" or "on (or below)" another component may mean not only that any component is arranged in contact with an upper surface (or lower surface) of the component, but also that still another component may be interposed between the component and another component arranged on (or below) the component.

Further, when one component is described as being "connected", "coupled", or "accessed" to another component, the components may be directly connected or accessed to each other, but it should also be understood that still another component may be "interposed" between the two components, or the two components may be "connected", "coupled" or "accessed" through still another component. Also, when a component is referred to as being "electrically connected" to another component, the component may be connected to the other component not only directly but also with one or more intervening components therebetween.

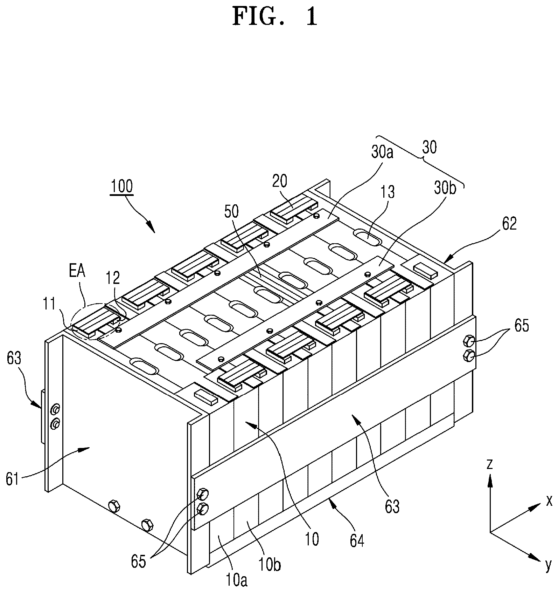

FIG. 1 is a schematic perspective view of a battery module according to an embodiment of the present disclosure.

Referring to FIG. 1, a battery module 100 according to an embodiment of the present disclosure may include a plurality of battery cells 10 each including a terminal part (i.e., terminal parts 11 and 12) aligned (or substantially aligned) in one direction, connection tabs 20 each connecting any one battery cell 10a to another battery cell 10b adjacent to the battery cell 10a, and a protection circuit module 30 having one side end portion (e.g., a lengthwise outer edge) connected to the connection tabs 20.

The protection circuit module 30 may be a battery management system (BMS). The connection tabs 20 may each include a body portion contacting the terminal part (i.e., 11 and 12) between the adjacent battery cells 10a and 10b, and an extension portion extending from the body portion and connected to the protection circuit module 30. The connecting tabs 20 may be bus bars.

First, the battery cell 10 may include a battery case, and an electrode assembly and an electrolyte accommodated in the battery case. The electrode assembly and electrolyte may electrochemically react to generate energy.

One surface of the battery cell 10 may include the terminal part (i.e., 11 and 12) electrically connected to the connection tab 20, and a vent 13 which is a passage for discharging gas generated internally. The terminal part (i.e., 11 and 12) of the battery cell 10 may include a positive electrode terminal 11 and a negative electrode terminal 12 which have different polarities from each other. The terminal parts (i.e., 11 and 12) of the adjacent battery cells 10a and 10b may be electrically connected by the connection tab 20 to be explained later in series or in parallel. The above description has been given of an example of a serial connection, but the connection structure is not limited to the serial structure, and various connection structures may be adopted as needed. Additionally, the number and arrangement of battery cells are not limited to the structure illustrated in FIG. 1 and may vary as needed.

The plurality of battery cells 10 may be aligned in one direction so that wide surfaces of the battery cells 10 are opposite to each other. The aligned plurality of battery cells 10 may be fixed by a housing (i.e., 61, 62, 63, and 64).

The housing (i.e., 61, 62, 63, and 64) may include a pair of end plates 61 and 62 opposite to the wide surfaces of the battery cells 10, and side plates 63 connecting the pair of end plates 61 and 62, and a bottom plate 64.

The side plates 63 may support side surfaces of the battery cells 10, and the bottom plate 64 may support bottom surfaces of the battery cells 10. The pair of end plates 61 and 62, the side plates 63, and the bottom plate 64 may be connected by using members such as bolts 65.

The protection circuit module 30 may include electronic components, protection circuits, and the like, and may be electrically connected to the connection tabs 20 to be described later.

The protection circuit module 30 may include a first protection circuit module 30a and a second protection circuit module 30b which extend at different locations along the direction in which the plurality of battery cells 10 are aligned. The first protection circuit module 30a and the second protection circuit module 30b may be spaced apart by a certain distance and may be located in parallel, to be electrically connected to the adjacent connection tabs 20, respectively.

For example, the first protection circuit module 30a may extend at one side on top of the plurality of battery cells 10 along the direction in which the plurality of battery cells 10 are aligned, and the second protection circuit module 30b may extend at another side on the top of the plurality of battery cells 10 along the direction in which the plurality of battery cells 10 are aligned. Here, the second protection circuit module 30b may be spaced apart from the first protection circuit module 30a by a certain distance with the vent 13 located between the second protection circuit module 30b and the first protection circuit module 30a, but may be arranged in parallel to the first protection circuit module 30a.

As such, two protection circuit modules may be arranged in parallel with being spaced apart from each other along a direction in which a plurality of battery cells are aligned, thereby minimizing an area of a printed circuit board (PCB) which constitutes a protection circuit module. An unnecessary area of the PCB may be minimized by forming the protection circuit module using two separate protection circuit modules.

The first protection circuit module 30a and the second protection circuit module 30b may be connected to each other by a conductive connection member 50. In this instance, one side of the connection member 50 may be connected to the first protection circuit module 30a, and another side connected to the second protection circuit module 30b, such that the two protection circuit modules may be electrically connected to each other.

The connection may be made by any one of a soldering method, a resistance welding method, a laser welding method, or a projection welding method.

The connection member 50 may be, for example, an electric wire. In some embodiments, the connection member 50 may include a material having elasticity or flexibility. Whether voltages, temperatures, and currents of the plurality of battery cells 10 are normal or not may be examined and managed by the connection member 50.

That is, information about voltages, currents, and temperatures, which are received by the first protection circuit module 30a from the connection taps adjacent to the first protection circuit module 30a, and information about voltages, currents, and temperatures, which are received by the second protection circuit module 30b from the connection taps adjacent to the second protection circuit module 30b, may be integrally managed by the protection circuit module through the connection member 50.

When the battery cell 10 swells up, an impact of the swelling may be absorbed by the connection member 50 according to elasticity or flexibility of the connection member 50, thereby suppressing damages to the first and second protection circuit modules 30a and 30b.

The shape and structure of the connection member 50 are not limited to those shown in FIG. 1.

As such, because the protection circuit module 30 includes the first and second protection circuit modules 30a and 30b, an area of a PCB constituting a protection circuit module may be minimized, thereby securing a space inside the battery module. This may facilitate a coupling operation of connecting the connection tabs 20 and the protection circuit module 30 and a repair when a malfunction of the battery module is detected, thereby improving operation efficiency.

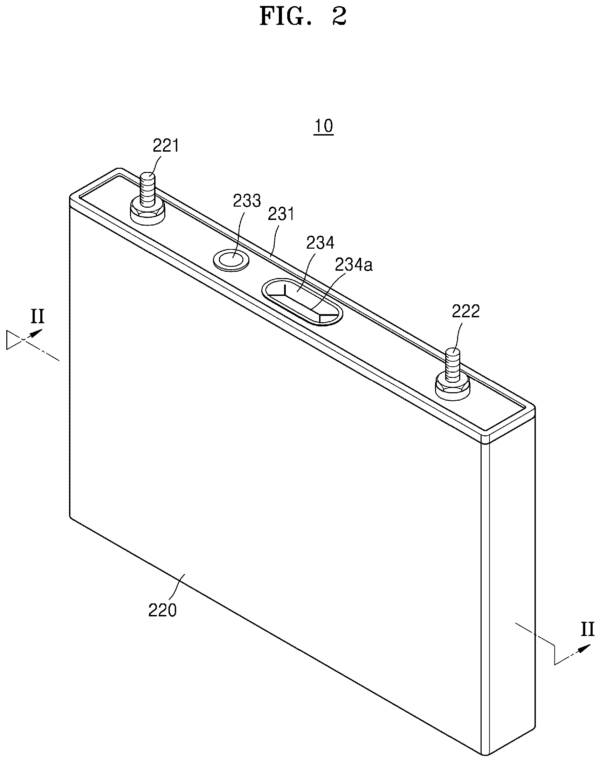

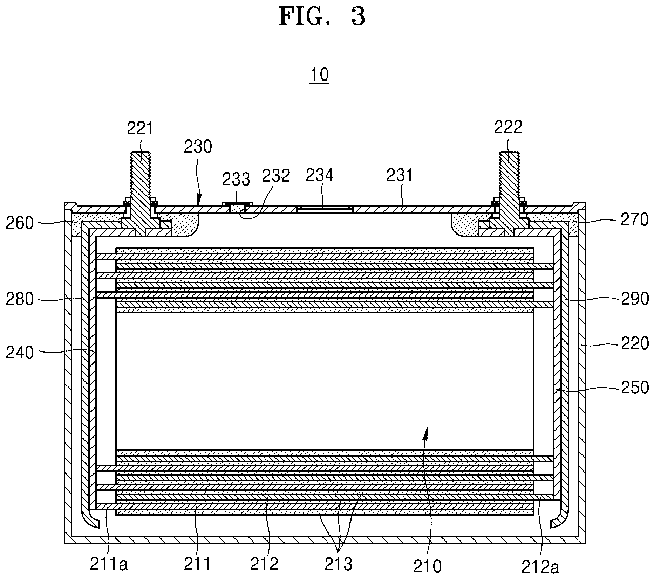

FIG. 2 is a schematic perspective view of a battery cell 10 of the battery module of FIG. 1, and FIG. 3 is a schematic cross-sectional view of the battery cell 10 of FIG. 2 taken along line II-II of FIG. 2.

Referring to FIGS. 2 and 3 together, the battery cell 10 according to an embodiment may include at least one electrode assembly 210, in which a positive electrode 211 and a negative electrode 212 are wound with a separator 213 as an insulator between the positive electrode 211 and the negative electrode 212, a case 220 in which the electrode assembly 210 is accommodated (e.g. housed), and a cap assembly 230 coupled to an opening of the case 220.

A description will be given in which the battery cell 10 according to an embodiment is a lithium ion battery cell having a square shape. However, the present disclosure is not limited thereto and it is applicable to various types of battery cells, such as lithium polymer battery cells or cylindrical battery cells.

The positive electrode 211 and the negative electrode 212 may include coated parts and uncoated parts 211a and 212a, respectively, in a current collector formed of a thin plate metal foil. The coated parts may be coated with an active material and the uncoated parts 211a and 212a may not be coated with the active material.

The positive electrode 211 and the negative electrode 212 may be wound after placing the separator 213 as the insulator between the positive electrode 211 and the negative electrode 212. However, the present disclosure is not limited thereto, and the electrode assembly 210 described above may be formed in a structure in which a a plurality of positive electrode sheets and a plurality of negative electrode sheets are alternately stacked with a separator between each adjacent pair of the positive electrode sheet and the negative electrode sheet.

The case 220 may form an overall appearance of the battery cell 10 and may include a conductive metal, such as aluminum, an aluminum alloy, or nickel-plated steel. The case 220 may also provide a space in which the electrode assembly 210 is accommodated.

The cap assembly 230 may include a cap plate 231 covering the opening of the case 220. The case 220 and the cap plate 231 may include a conductive material. Here, the positive and negative electrode terminals 221 and 222 which are electrically connected to the positive electrode 211 or the negative electrode 212 may be installed to protrude outward through the cap plate 231.

In one or more embodiments, outer circumferential surfaces of upper pillars of the positive and negative electrode terminals 221 and 222, respectively, which protrude to the outside of the cap plate 231, may be threaded and fixed to the cap plate 231 with nuts.

However, the disclosure is not limited thereto, and the positive and negative electrode terminals 221 and 222 may have a rivet structure and may be riveted or welded to the cap plate 231.

The cap plate 231 may be a thin plate and may be coupled to the opening of the case 220. An electrolyte injection port 232 in which a sealing stopper 233 may be installed may be formed in the cap plate 231. A vent portion 234 having a notch may be installed in the cap plate 231.

The positive and negative electrode terminals 221 and 222 may be electrically connected to a current collector, which includes first and second current collectors 240 and 250 (hereinafter, referred to as positive and negative electrode current collectors 240, 250, respectively) welded to the uncoated part 211a of the positive electrode 211 or the uncoated part 212a of the negative electrode 212.

In one or more embodiments, the positive and negative electrode terminals 221 and 222 may be welded to the positive and negative electrode current collectors 240 and 250, respectively. However, the present disclosure is not limited thereto, and the positive electrode terminal 221 and the positive electrode current collector 240 may be integral (e.g., monolithic) and negative electrode terminal 222 and the negative electrode current collector 250 may be integral (e.g., monolithic).

In some embodiments, an insulating member may be between the electrode assembly 210 and the cap plate 231. In one or more embodiments, the insulating member may include first and second lower insulating members 260 and 270. The first and second lower insulating members 260 and 270 may each be between the electrode assembly 210 and the cap plate 231.

According to an embodiment, one end of a separating member, which may be opposite to one side surface of the electrode assembly 210, may be between the insulating member (e.g., 260 or 270) and the positive or negative electrode terminal 221 or 222.

In one or more embodiments, the separating member may include first and second separating members 280 and 290.

Accordingly, one end of the first separating member 280 and one end of the second separating member 290, which are at opposite side surfaces of the electrode assembly 210, may be between the first lower insulating member 260 and the positive electrode terminal 221 and between the second lower insulating member 270 and the negative electrode terminal 222, respectively.

The positive and negative electrode terminals 221 and 222, which are welded to the positive and negative electrode current collectors 240 and 250, respectively, are coupled to the first and second lower insulating members 260 and 270, respectively, and the corresponding ends of the first and second separating members 280 and 290, respectively.

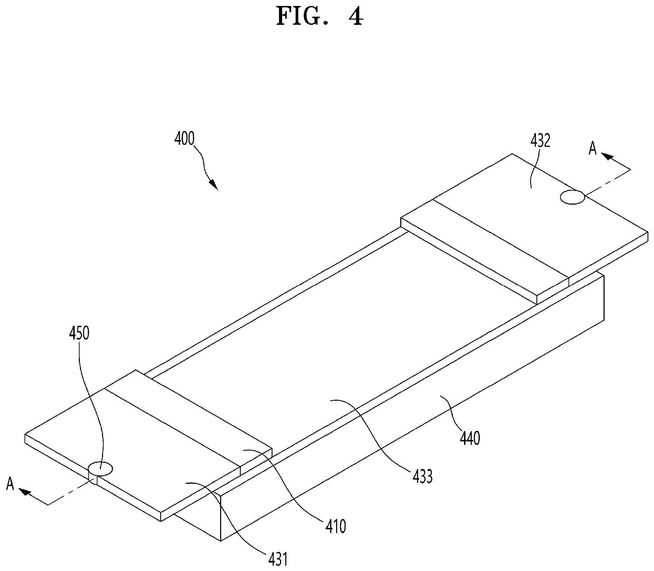

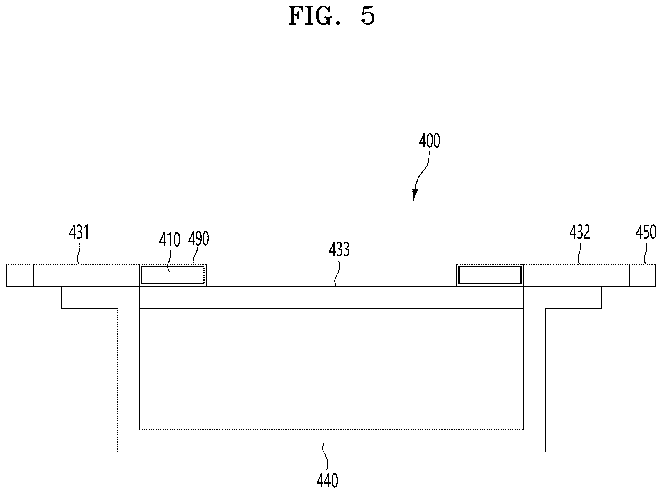

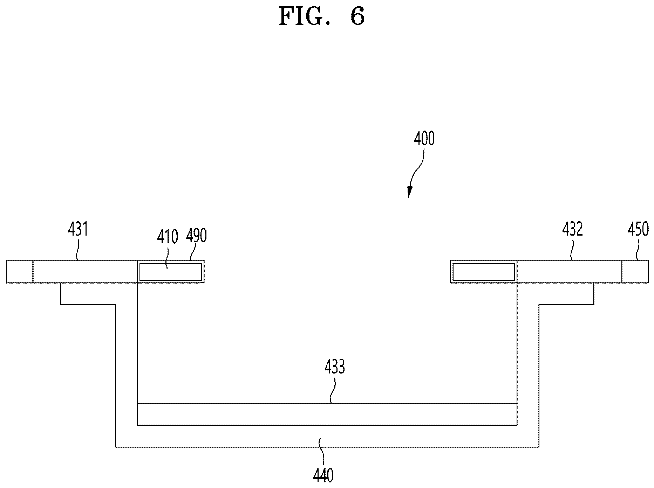

FIG. 4 is a schematic perspective view of region EA of FIG. 1 depicting one of the bus bars 400, and FIGS. 5 and 6 are schematic cross-sectional views of the bus bar 400 taken along line A-A of FIG. 4.

FIG. 5 illustrates a state in which a current path of a bus bar 400 is connected, and FIG. 6 illustrates a state in which the current path of the bus bar 400 is disconnected.

Referring to FIGS. 4 to 6 together, the bus bar 400 may include a first conductor 431 and a second conductor 432 connected to different unit battery cells 10 of adjacent unit battery cells 10 (see FIG. 1) (e.g., the first conductor 431 is connected to one unit battery cell 10 and the second conductor 432 is connected to another unit battery cell 10), and a connecting portion 433 electrically connecting the first conductor 431 to the second conductor 432.

The first conductor 431 and the second conductor 432 may each include a fastening portion 450. The fastening portions 450 may be connected to terminal parts of the adjacent unit battery cells 10, and current may flow through the bus bar 400 via the fastening portions 450.

The first conductor 431 and the second conductor 432 may include a material having sufficient electrical conductivity, for example, at least one of nickel, silver, aluminum, copper, or gold, but the materials are not limited thereto.

An end of the first conductor 431 and an end of the second conductor 432 may each include a first magnet 410.

The first magnets 410 may be attached to the connecting portion 433 by magnetic force. The connecting portion 433 may include a ferromagnetic material or a paramagnetic material. In one or more embodiments, the connecting portion 433 may include a magnet which has an opposite polarity to the first magnet 410. Accordingly, the connecting portion 433 may be attached to the first magnets 410 by magnetic force. In one or more embodiments, the connecting portion 433 may be attached to lower surfaces of the first magnets 410. That is, attractive force between the connecting portion 433 and the first magnets 410 may be stronger than the gravity acting on the connecting portion 433.

Each of the first magnets 410 may further include a metal layer 490. The metal layer 490 may be a layer which is coated on a surface of the first magnet 410. Because the first magnet 410 includes the metal layer 490, electrical conductivity of the bus bar 400 may increase and oxidation of the first magnet 410 may be suppressed (or at least reduced).

The metal layer 490 may include a material having sufficient electrical conductivity, for example, at least one of nickel, silver, aluminum, copper, or gold, but the present disclosure is not limited thereto.

The metal layer 490 may have a thickness in a range from approximately 0.01 mm to approximately 50 mm. If the thickness of the metal layer 490 were less than 0.01 mm, the improvement in conductivity due to the metal layer 490 may be minimal or negligible. If the thickness of the metal layer 490 exceeded 50 mm, the bus bar 400 may excessively increase in size, and the manufacturing efficiency of the bus bar 400 may decrease. In one or more embodiments, the thickness of the metal layer 490 may range from approximately 0.05 mm to approximately 10 mm or from approximately 0.1 mm to approximately 4 mm.

The first magnet 410 may be a material having a low Curie temperature. For example, the first magnet 410 may include, but is not limited to, a neodymium magnet. In some embodiments, the first magnet 410 included in the first conductor 431 and the first magnet 410 included in the second conductor 432 may be magnets including one or more different materials.

Magnets may produce magnetism because electrons in atoms are aligned in a specific direction. As the temperature of a magnet increases, a thermal motion of atoms and electrons may become more active, and the electrons that contribute to the magnetism of the magnet may begin to become misaligned. As the temperature increases close to the Curie temperature of the magnet, a magnetic order in the magnet may be increasingly disrupted. When the temperature reaches the Curie temperature of the magnet, the magnet may lose all magnetism (or substantially all magnetism) and may transition from a ferromagnet to a paramagnet.

The Curie temperature of the first magnet 410 may be lower than temperature at the time of thermal runaway of the battery cell 10. For example, the Curie temperature of the first magnet 410 may be in a range from approximately 60°C to approximately 300°C. In response to an event occurring due to a short circuit, thermal runaway, overcurrent, or heat generation due to resistance, the first magnet 410 may lose magnetic force due to high heat and fall into a basket 440, described later. This may result in disconnecting a current path, thereby increasing stability of the battery module 100.

In one or more embodiments, the sensitivity to a temperature-dependent detachment (falling) point, a fall distance, and the like of the connecting portion 433 may be controlled by adjusting the Curie temperature of the first magnet 410 and a mass of the connecting portion 433.

For example, below the Curie temperature, as shown in FIG. 5, the magnetic attractive force between the first magnet 410 and the connecting portion 433 may be set to be stronger than the gravity acting on the connecting portion 433, and therefore the first magnet 410 and the connecting portion 433 may be attached to each other and a current path may be connected or established.

In other embodiments, when the temperature of the battery cell 10 rises to near the Curie temperature of the first magnet 410, the magnetic force of the first magnet 410 may become weak and the attractive force between the first magnet 410 and the connecting portion 433 may become weaker than the gravitational force acting on the connecting portion 433, thereby causing the connecting portion 433 to be detached from and fall off the first magnet 410. Accordingly, the current path may be disconnected or interrupted.

Joule heat due to current may be defined as the product of the square of the intensity of current and resistance. Therefore, when the current path of the bus bar 400 is disconnected, thermal runaway, which results from additional heat generated due to current-induced Joule heat, may be suppressed, thereby increasing the stability of the battery.

The connecting portion 433 may electrically connect the first conductor 431 to the second conductor 432. The connecting portion 433, the first conductor 431, and the second conductor 432 may include (or be formed of) the same material.

The bus bar 400 may further include a basket 440 which defines a concave seat portion below the connecting portion 433.

In response to the first magnet 410 losing magnetic force at a temperature at or near the Curie temperature, the connecting portion 433 is detached from and falls off the first magnet 410 and into the basket 440. The basket 440 may accommodate the connecting portion 433. The detachment of the connecting portion 433 may suppress (or at least mitigate against) a short circuit or the like from occurring in the battery module 100.

In one or more embodiments, the basket 440 may have electrical insulation properties so that no current flows when the connecting portion 433 is detached, may be configured not to deform (or substantially not deform) at high temperature, and may include a sturdy or rigid material that is configured to withstand an impact of the connecting portion 433 being dropped into the basket 440.

For example, the basket 440 may include, but is not limited to, polytetrafluoroethylene (PTFE, Teflon), polyvinyl chloride (PVC), an epoxy resin, and/or glass fiber reinforced plastic (FRP).

In response to the connecting portion 433 falling off the first magnet 410, a short circuit may occur between the first magnet 410 and the connecting portion 433 due to moisture, foreign substances, dust, and the like, or an induced current may be generated between the first magnet 410 and the connecting portion 433. To suppress this, the bus bar 400 may be configured to ensure a minimum fall distance when the connecting portion 433 falls off the first magnet 410 and into the basket 440. The fall distance may be defined as a difference between a depth of the basket 440 (e.g., the distance that the basket 440 extends downward from the first and second conductors 431 and 432) and a thickness of the connecting portion 433.

A minimum fall distance when the connecting portion 433 is detached may be set to comply with the applicable internal pressure and insulation distance standards, such as EN61558, IPC-2221, IPC-9592B, and UL-61010-1.

A fall distance may vary depending on a voltage supplied by the battery module. The fall distance may be decreased when a small voltage is supplied, and the fall distance may be increased when a large voltage is supplied by the battery module. For example, a fall distance of the connecting portion 433 of a battery cell used in an electric vehicle may be different from a fall distance of the connecting portion 433 of a battery cell used in a mobile device.

In an embodiment, the fall distance of the connecting portion 433 may range from approximately 1 mm to approximately 100 mm. In one or more embodiments, the fall distance of the connecting portion 433 may range from approximately 5 mm to approximately 50 mm or from approximately 10 mm to approximately 20 mm.

In some embodiments, after the connecting portion 433 falls off the first magnet 410 because the magnetic force between the first magnet 410 and the connecting portion 433 becomes weaker than the gravitational force acting on the connecting portion 433 due to the temperature of the battery cell rising to near the Curie temperature of the first magnet 410, and after the temperature of the battery cell becomes lower than the Curie temperature of the first magnet 410 again, the magnetism of the first magnet 410 may be recovered by applying an external magnetic field (e.g., the first magnet 410 may be re-magnetized).

The magnetic force between the first magnet 410 and the connecting portion 433 may decrease as a distance between the first magnet 410 and the connecting portion 433 increases. Accordingly, even when the first magnet 410 recovers the magnetism, the magnetic force between the first magnet 410 and the connecting portion 433 may be weakened due to the increase in distance, which is caused by the fall distance, and thus may be weaker than the gravitational force acting on the connecting portion 433. Accordingly, in one or more embodiments, the battery module may be turned over (e.g., upside down) so that the gravitational force acting on the connecting portion 433 acts in a direction toward the first magnet 410, and thus the first magnet 410 and the connecting portion 433 may be reattached to each other.

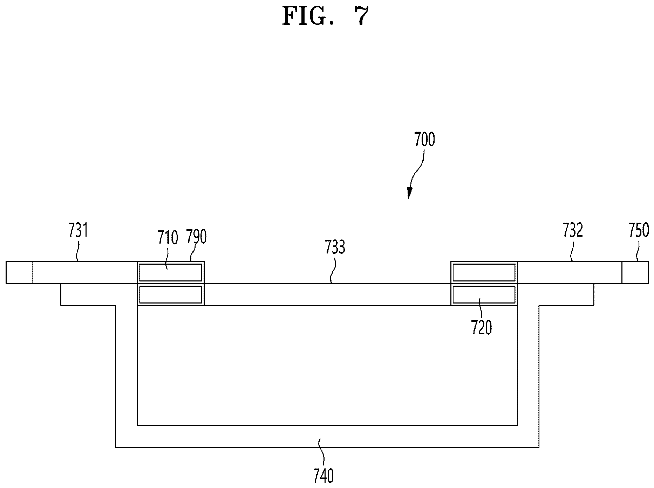

FIG. 7 is a schematic cross-sectional view of another embodiment of the bus bar 700 taken along the line A-A of FIG. 4.

Referring to FIG. 7, the bus bar 700 may include first magnets 710, a first conductor 731, a second conductor 732, a connecting portion 733, a basket 740, fastening portions 750, metal layers 790, and second magnets 720 on opposite ends of the connecting portion 733 and attached to the respective first magnets 710.

The first magnets 710, the first conductor 731, the second conductor 732, the connecting portion 733, the basket 740, the fastening portions 750, and the metal layers 790 may be the same as the first magnets 410, the first conductor 431, the second conductor 432, the connecting portion 433, the basket 440, the fastening portions 450, and the metal layers 490, respectively, described with reference to FIGS. 4 to 6, and thus a repeated description thereof will be omitted.

The second magnet 720 and the corresponding first magnet 710 may be arranged so that their polarities are opposite to each other, and the first magnet 710 and the second magnet 720 may be attached to each other by a magnetic force.

In an embodiment in which the bus bar 700 includes the first magnets 710 and the second magnets 720, the sensitivity to temperature may be precisely adjusted by selecting a magnet with a different Curie temperature. In some embodiments, the second magnets 720 located on opposite ends of the connecting portion 733 may include one or more different materials than the first magnets 710.

For example, in an embodiment in which the first magnets 710 and the second magnets 720 have the same Curie temperature T₁, when the temperature of the battery cell rises to a temperature Tₓ near the Curie temperature T₁, the first magnets 710 and the second magnets 720 may lose magnetism and the magnetic force may be weakened. Therefore, the sum of attractive forces between the first magnets 710 and the second magnets 720 may become smaller than the gravity acting on the connecting portion 733, and thereby the connecting portion 733 may be detached and fall off, thereby disconnecting or interrupting a current path.

In other embodiments in which one of the first magnets 710 and the second magnets 720 has a higher Curie temperature T₂ and the remaining three magnets has the same Curie temperature T₁ as each other, when the temperature of the battery cell is equal to the temperature Tₓ at which the connecting portion 733 is detached, the magnetic force of the one magnet may not be weakened as much as the magnetic forces of the remaining three magnets because the one magnet has the higher Curie temperature, even when the magnetic forces of the remaining three magnets are weakened. Therefore, the sum of the attractive forces between the first magnets 710 and the second magnets 720 may be larger than the gravitational force acting on the connecting portion 733. Accordingly, a current path may remain connected even when the temperature of the battery cell is equal to the temperature Tₓ at which the connecting portion 733 is detached from the three magnets having the same Curie Temperature T₁. In this instance, the connecting portion 733 may be detached and fall off (and into the basket 740) and the current path may be disconnected due to further increasing the temperature of the battery cell 10 to further weaken the sum of the attractive magnetic forces between the first magnets 710 and the second magnets 720 and the connecting portion 733 to be less than the gravitational force acting on the connecting portion 733.

Joule heat by current may be defined as the product of the square of the intensity of current and resistance. Therefore, when the current path of the bus bar 700 is disconnected or interrupted, thermal runaway, which results from additional heat generated due to current-induced Joule heat, may be suppressed, thereby increasing the stability of the battery.

Accordingly, the sensitivity to a temperature-dependent detachment (falling) point, a fall distance, and the like of the connecting portion 733 may be controlled by adjusting the Curie temperatures of the first magnets 710 and the second magnets 720 and a mass of the connecting portion 733.

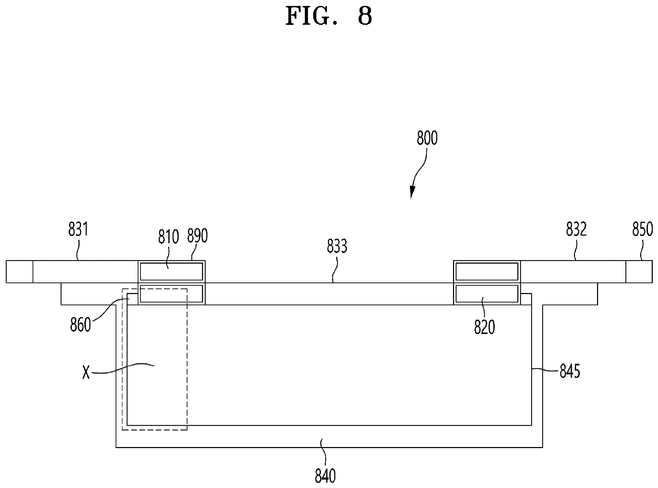

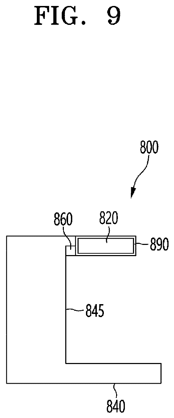

FIG. 8 is a schematic cross-sectional view of another embodiment of a bus bar 800 taken along the line A-A of FIG. 4, and FIG. 9 is a schematic enlarged view of a region X of the bus bar 800 of FIG. 8.

Referring to FIGS. 8 and 9 together, the bus bar 800 may include first magnets 810, second magnets 820, a first conductor 831, a second conductor 832, a connecting portion 833 connecting the first conductor 831 to the second conductor 832, a basket 840, fastening portions 850, and metal layers 890. In some embodiments, a vertical inner surface of the basket 840 may include a first guide portion 845, which guides movement of the connecting portion 833, and one side surface of the connecting portion 833 may include a second guide portion 860, which is fastened to the first guide portion 845.

The first magnets 810, the second magnets 820, the first conductor 831, the second conductor 832, the connecting portion 833, the basket 840, the fastening portions 850, and the metal layers 890 may be the same as the first magnets 710, the second magnets 720, the first conductor 731, the second conductor 732, the connecting portion 733, the basket 740, the fastening portions 750, and the metal layers 790, respectively, described with reference to FIG. 7, and thus a repeated description thereof will be omitted.

The first guide portion 845 may be or include one of a groove or a rail, and the second guide portion 860 may be or include the other of the groove or the rail (e.g., the first and second guide portions 845, 860 may have corresponding shapes). The shape of the groove may be various, such as a circular shape, an elliptical shape, a rectangular shape, and the like, but the present disclosure is not limited thereto.

The first guide portion 845 and the second guide portion 860 may be coupled to each other, and they may be configured to guide a direction in which the connecting portion 833 moves when the connecting portion 833 detaches from the first magnets 810 and falls off.

As such, in an embodiment in which the basket 840 and the connecting portion 833 include the first guide portion 845 and the second guide portion 860, the falling of the connecting portion 833 may be efficiently guided into the basket 840 when the connecting portion 833 falls off because the magnetic force between the first magnet 810 and the second magnet 820 becomes weaker than the gravitational force acting on the connecting portion 833 due to the increase in the temperature of the battery cell to near the Curie temperature of at least one of the first magnet 810 or the second magnet 820.

In some embodiments, after the connecting portion 833 falls off because the gravitational force acting on the connecting portion 833 becomes stronger than the magnetic force between the first magnet 810 and the second magnet 820 due to the increase in the temperature of the battery cell, and after the temperature of the battery cell decreases again below the Curie temperature, the magnetism of the first magnet 810 or the second magnet 820 may be recovered by applying an external magnetic field (e.g., the first magnets 810 and the second magnets 820 may be re-magnetized).

The magnetic force between the first magnet 810 and the second magnet 820 may decrease as a distance between the first magnet 810 and the second magnet 820 increases. Accordingly, even when the magnetism of the first magnet 810 or the second magnet 820 is recovered, the magnetic force between the first magnet 810 and the second magnet 820 may be weakened due to the increase in the distance, which is caused by a fall distance, and thereby may be weaker than the gravity acting on the connecting portion 433. Accordingly, in one or more embodiments, the battery module may be turned over (e.g., upside down) so that the gravitational force acting on the connecting portion 433 acts in a direction toward the first magnet 810, and thus the first magnet 810 and the second magnet 820 may be reattached to each other.

In an embodiment in which the basket 840 and the connecting portion 833 include the first guide portion 845 and the second guide portion 860, respectively, the movement of the connecting portion 833 may be efficiently guided even when the first magnet 810 and the second magnet 820 are reattached to each other.

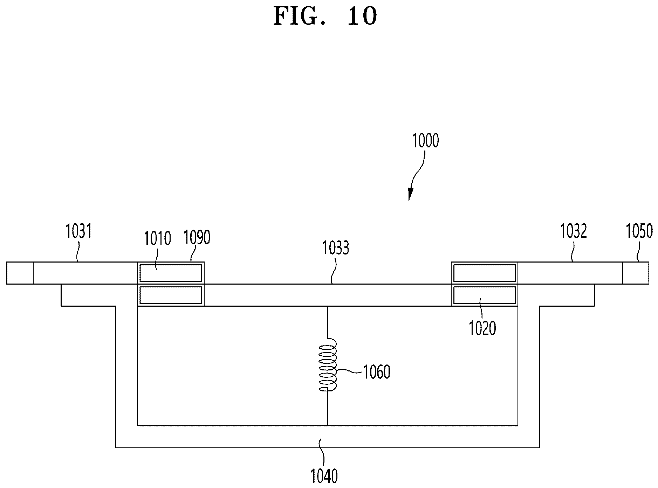

FIG. 10 is a schematic cross-sectional view of an embodiment of a bus bar 1000 taken along the line A-A of FIG. 4.

Referring to FIG. 10, the bus bar 1000 may include first magnets 1010, second magnets 1020, a first conductor 1031, a second conductor 1032, a connecting portion 1033 connecting the first conductor 1031 to the second conductor 1032, a basket 1040, fastening portions 1050, and metal layers 1090. In some embodiments, the bus bar 1000 may further include an elastic member 1060 (e.g., a spring) between the connecting portion 1033 and the basket 1040. The elastic member 1060 may apply tension (e.g., a downward force) to the connecting portion 1033.

The first magnets 1010, the second magnets 1020, the first conductor 1031, the second conductor 1032, the connecting portion 1033, the basket 1040, the fastening portions 1050, and the metal layers 1090 may be the same as the first magnets 710, the second magnets 720, the first conductor 731, the second conductor 732, the connecting portion 733, the basket 740, the fastening portions 750, and the metal layers 790, respectively, described with reference to FIG. 7, and thus a repeated description thereof will be omitted.

One end of the elastic member 1060 may be connected to the connecting portion 1033, and another end of the elastic member 1060 may be connected to the basket 1040. The elastic member 1060 may apply tension to the connecting portion 1033 in the same direction (e.g., downward) as the gravitational force acting on the connecting portion 1033.

Because the direction in which the tension of the elastic member 1060 acts is the same as the direction in which the gravitational force acts on the connecting portion 1033, even when the gravitational force acting on the connecting portion 1033 is weakened due to reduction in mass of the connecting portion 1033, the magnetic force between the first magnet 1010 and the second magnet 1020 may become smaller than the sum of the gravitational acting on the connecting portion 1033 and the elastic force of the elastic member 1060 due to the increase in the temperature of the battery cell to be near the Curie temperature of either the first magnet 1010 or the second magnet 1020, thereby disconnecting or interrupting a current path that flows from the first conductor 1031 to the second conductor 1032.

Therefore, a mass of the bus bar 1000 may be reduced by including the elastic member 1060 in the bus bar 1000, thereby reducing a manufacturing cost and increasing integration of the battery module.

In one or more embodiments, the sensitivity to a temperature-dependent detachment (falling) point, a fall distance, and the like of the connecting portion 1033 may be more precisely controlled by adjusting an elastic coefficient of the elastic member 1060, the Curie temperatures of the first magnet 1010 and the second magnet 1020, and the mass of the connecting portion 1033.

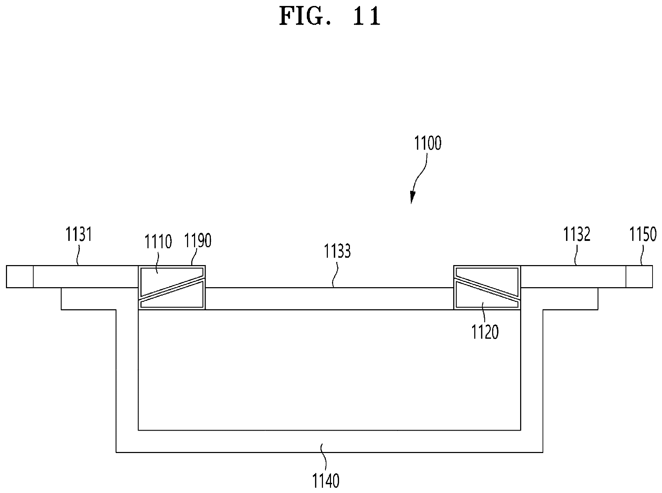

FIG. 11 is a schematic cross-sectional view of a bus bar 1100 taken along the line A-A of FIG. 4.

Referring to FIG. 11, the bus bar 1100 may include first magnets 1110, second magnets 1120, a first conductor 1131, a second conductor 1132, a connecting portion 1133 connecting the first conductor 1131 to the second conductor 1132, a basket 1140, fastening portions 1150, and metal layers 1190.

The first magnets 1110, the second magnets 1120, the first conductor 1131, the second conductor 1132, the connecting portion 1133, the basket 1140, the fastening portions 1150, and the metal layers 1190 may be the same as the first magnets 710, the second magnets 720, the first conductor 731, the second conductor 732, the connecting portion 733, the basket 740, the fastening portions 750, and the metal layers 790, respectively, described with reference to FIG. 7, and thus a repeated description thereof will be omitted.

The first magnet 1110 included in the first conductor 1131 may have a width that decreases in a downward direction (e.g., the first magnet 1110 may taper downward), and the second magnet 1120 included in the connecting portion 1133 may have a shape corresponding to the first magnet 1110.

Additionally, after the connecting portion 1133 falls off because the magnetic force between the first magnet 1110 and the second magnet 1120 becomes weaker than the gravitational force acting on the connecting portion 1133 due to the temperature of the battery cell increasing near or higher than the Curie temperature of the first magnet 1110 or the second magnet 1120, and after the temperature of the battery cell becomes lower than the Curie temperature of the first magnet 1110 or the second magnet 1120, the magnetism of the first magnet 1110 or the second magnet 1120 may be recovered by applying an external magnetic field (e.g., the first magnet 1110 and/or the second magnet 1120 may be re-magnetized).

The magnetic force between the first magnet 1110 and the second magnet 1120 may decrease as a distance between the first magnet 1110 and the second magnet 1120 increases. Accordingly, even when the magnetism of the first magnet 1110 or the second magnet 1120 is recovered, the magnetic force between the first magnet 1110 and the second magnet 1120 may be weakened due to the increase in the distance, which is caused by a fall distance, and thus may be weaker than the gravitational force acting on the connecting portion 1133. Accordingly, the battery module may be turned over (e.g., upside down) so that the gravity acting on the connecting portion 1133 acts in a direction toward the first magnet 1110, and thus the first magnet 1110 and the second magnet 1120 may be reattached to each other.

In an embodiment in which the bus bar 1100 includes the first magnet 1110 having the width that decreases downward and the second magnet 1120 having the shape corresponding to the first magnet 1110, even when the first magnet 1110 and the connecting portion 1133 are reattached to each other, the first magnet 1110 and the second magnet 1120 may be attached at a more accurate position by virtue of the shapes of the first magnet 1110 and the second magnet 1120, thereby minimizing contact resistance.

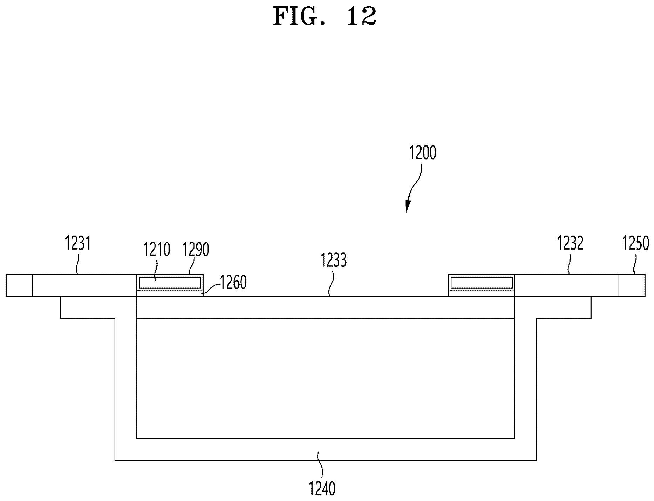

FIG. 12 is a schematic cross-sectional view of a bus bar 1200 taken along the line A-A of FIG. 4.

Referring to FIG. 12, the bus bar 1200 may include first magnets 1210, a first conductor 1231, a second conductor 1232, a connecting portion 1233, a basket 1240, fastening portions 1250 connecting the first conductor 1231 to the second conductor 1232, metal layers 1290, and conductive paste layers 1260 on surfaces of the respective first magnets 1210.

The first magnets 1210, the first conductor 1231, the second conductor 1232, the connecting portion 1233, the basket 1240, the fastening portions 1250, and the metal layers 1290 may be the same as the first magnets 410, the first conductor 431, the second conductor 432, the connecting portion 433, the basket 440, the fastening portions 450, and the metal layers 490, respectively, described with reference to FIGS. 4 to 6, and thus a repeated description thereof will be omitted.

A portion where the corresponding first magnet 1210 and the connecting portion 1233 overlap (and would otherwise contact with each other) may include the conductive paste layer 1260. The conductive paste layer 1260 may be formed by coating a conductive paste on a surface where the first magnet 1210 and the connecting portion 1233 overlap each other (and would otherwise contact each other). The conductive paste layer 1260 may reduce an air gap between the surfaces where the first magnet 1210 and the connecting portion 1233 overlap each other, thereby reducing contact resistance.

The conductive paste layer 1260 may include at least one of metal particles, carbon nanotubes, carbon black, and/or conductive resin, each of which has sufficient electrical conductivity, but the present disclosure is not limited thereto.

In some embodiments, a surface of the second magnet 1120 according to the previous embodiment may also include a conductive paste layer.

According to one or more embodiments, when temperature of a battery module rises above a certain temperature, a current path may be automatically disconnected, thereby improving stability of the battery module.

While the disclosure has been herein described with regard to the limited embodiments and drawings, the disclosure is not limited thereto and it is obvious to those skilled in the art that various modifications and changes may be made within the scope of the appended claims.

## Claims

1. A battery module (100) comprising:
a plurality of battery cells (10); and
a plurality of bus bars (400, 700, 800, 1000, 1100, 1200) electrically connecting the plurality of battery cells,
wherein each bus bar (400, 700, 800, 1000, 1100, 1200) of the plurality of bus bars comprises a first conductor (431, 731, 831, 1031, 1131, 1231) and a second conductor (432, 732, 832, 1032, 1132, 1232) connected to two adjacent battery cells (10) of the plurality of battery cells, and a connecting portion (433, 733, 833, 1033, 1133, 1233) electrically connecting the first conductor to the second conductor,
wherein an end of the first conductor and an end of the second conductor each comprise a first magnet (410, 710, 810, 1010, 110, 1210),
wherein opposite ends of the connecting portion (433, 733, 833, 1033, 1133, 1233) are each attached by the first magnet (410, 710, 810, 1010, 1110, 1210), and
wherein a metal layer (490, 790, 890, 1090, 1190, 1290) is on a surface of the first magnet (410, 710, 810, 1010, 1110, 1210).

2. The battery module of claim 1,
wherein each of the opposite ends of the connecting portion (733, 833, 1033, 1133) further comprise a second magnet (720, 820, 1020, 1120) opposing the first magnet (710, 810, 1010, 1110), the second magnet having a polarity opposite to that of the first magnet, and
wherein the first magnet (710, 810, 1010, 1110) is attached to the second magnet (720, 820, 1020, 1120).

3. The battery module of claim 1 or claim 2, further comprising a basket (440, 740, 840, 1040, 1140, 1240) below the connecting portion (433, 733, 833, 1033, 1133, 1233), the basket having a concave seat portion.

4. The battery module of claim 3, wherein the connecting portion (433, 733, 833, 1033, 1133, 1233) is configured to fall into the basket (440, 740, 840, 1040, 1140, 1240) in response to the first magnet (410, 710, 810, 1010, 1110, 1210) losing a magnetic force at at least a certain temperature.

5. The battery module of claim 3 or claim 4, further comprising a first guide portion (845) configured to guide movement of the plurality of bus bars (800) on a vertical inner surface of the basket (840), and a second guide portion (860) coupled to the first guide portion (845) on one side surface of the connecting portion (833).

6. The battery module of any one of claims 3 to 5, wherein a difference between a depth of the basket (440, 740, 840, 1040, 1140, 1240) and a thickness of the connecting portion (433, 733, 833, 1033, 1133, 1233) is in a range from approximately 1 mm to approximately 100 mm.

7. The battery module of any one of claims 3 to 6, further comprising an elastic member (1060) between the connecting portion (1033) and the basket (1040), the elastic member (1060) tensioning the connecting portion (1040).

8. The battery module of any one of claims 1 to 6, wherein a thickness of the metal layer (490, 790, 890, 1090, 1190, 1290) is in a range from approximately 0.01 mm to approximately 50 mm.

9. The battery module of claim 2, wherein the first magnet (1110) in each of the first conductor (1131) and the second conductor (1132) has a width that decreases downward, and wherein the second magnet (1120) in the connecting portion (1133) has a shape corresponding to the first magnet (1110).

10. The battery module of any one of claims 1 to 9, further comprising a conductive paste layer (1260) on a surface of the first magnet (1210).
